# EUROPEAN PATENT SPECIFICATION

(11) **EP 0 742 167 B1**
(45) Date of publication and mention of the grant of the patent: **03.11.1999**
(21) Application number: 96830266.1
(22) Date of filing: 08.05.1996
(51) Int. Cl.: B65G 61/00, B25J 9/02

(54) **Device for gathering articles onto pallets and the like**
Vorrichtung zur Beschickung von Paletten oder dergleichen mit Gegenständen
Dispositif pour fournir des articles sur des palettes ou autres

(30) Priority: 10.05.1995 IT BO950217
(43) Date of publication of application: 13.11.1996
(73) Proprietor: MARCHESINI GROUP S.p.A., I-40065 Pian di Macina Pianoro (Bologna) (IT)
(72) Inventor: Monti, Giuseppe, 40065-Pianoro, Bologna (IT)
(74) Representative: Dall'Olio, Giancarlo

(56) References cited:
- EP-A- 0 371 872
- DE-A- 3 513 507
- DE-C- 3 420 936
- GB-A- 2 000 739
- US-A- 4 696 574

## Description

The present invention concerns transferring articles to pallets, platforms and the like, according to the preamble of claim 1.

At present, automatic devices are known, that withdraw the articles fed by conveying means, e.g. formed by the outlet line of a packaging machine and then transfer these piled articles to a pallet.

These devices, commonly called robot device, usually feature a plurality of means movable according to three orthogonal axes and are equipped with a withdrawing head, rotating according to a vertical axis, see e.g. GB-A-2 000 739.

The movements of the above mentioned means are driven by a control unit, through suitable transducers and servomechanisms in such a manner as to arrange each single articles in a predetermined way, in particular in order to use the pallet loading space in the best way.

A disadvantage of the above mentioned devices relates to the situation and connection of the driving means, in particular electric motors, aimed at driving the single movements of the above mentioned movable means.

In fact, these devices, located for instance in the regions of the joints of the movable parts, need electric cables and other connecting means that encumber the same devices structure.

Moreover, this causes disadvantages while usual maintenance operations are performed because they require difficult handling and long duration of operations, resulting in a loss of the device productivity.

Document EP-A-0 371 872 discloses a multiaxis robot featuring a first arm that is driven in a direction transversal with respect to a support.

This support is driven vertically along the second arm, that is orthogonal with reference to the first one.

The driving means are all located and grouped on the second arm, in particularly they are placed on a plate carried by a support that is joined to a sliding element.

Document DE-A-35 13 507 discloses a device for depositing pralines into shaped depressions of package inserts.

This device comprises a plurality of feed paths extending parallel to each other and a plurality of insert units, that have grippers for removing pralines from the feed paths.

These grippers transfer to and deposit the pralines in a shaped depression allocated thereto, and they are arranged movable at least in two directions perpendicular to each other.

The grippers are operated by moving means in co-operation with flexible transmission means carried inside another section of this device.

The object of the present invention is to propose a device for transferring articles to pallets and the like equipped with a functional and compact structure, in particular for movements transmission to different movable means.

The above mentioned object is obtained in accordance with the content of the claims.

The characteristics of the invention will better understood from the following description, with particular reference to the attached drawings, in which:
- Figure 1 shows a schematic perspective view of the subject device;
- Figure 2 shows a corresponding plan view of the same device;
- Figure 3 shows a vertical section view of a portion of the subject device;
- Figure 4 and 5 show schematic views of this portion of the device in transversal section taken along sketched plans IV-IV and V-V of Fig. 3, respectively;
- Figure 6 shows another vertical section view of the above mentioned portion of the device;
- Figures 7 and 8 show a sectional view taken along the sketched plans VII-VII and VIII-VIII of Fig. 6;
- Figure 9 shows a detailed view in longitudinal section of a particular K of Figure 6;
- Figure 10 shows a sectional view taken along the plan X-X of Figure 9;
- Figure 11 shows a different embodiment of the above mentioned particular K;
- Figure 12 shows a sectional view taken along the plan XII-XII of Figure 11;
- Figure 13 shows a schematic vertical section view of another portion of the subject device;
- Figure 14 shows a vertical sectional view of a particular of this portion of the device;
- Figure 15 shows a correspondent transversal sectional view of the same particular of this portion of the device;
- Figure 16 shows a sectional view taken along the plan XVI-XVI of Figure 15; - Figure 17 shows a schematic horizontal section view of a terminal portion of the device;
- Figure 18 shows a sectional view of a particular of this terminal portion of the device;
- Figure 19 shows a sectional view taken along the plan XIX-XIX of Figure 18.

With reference to the above mentioned Figures, numeral 1 identifies the device for regular transferring of articles 2 to a pallet 3.

The articles 2 are conveyed in sequence to a withdrawing platform 4, in known way, by a feeding line 5, constituted by e.g. outlet line of a packaging machine.

The transferring device 1 features substantially a column 6 that moves in a horizontal direction, perpendicular to the feeding line 5, along a side of a stationary frame 7; a horizontal cross-piece 8 that moves vertically along the column 6 on a plan parallel to the feeding line 5; a carriage 9 that moves horizontally along the cross-piece 8; and a rotating head 10 carried by the carriage 9 with possibility to rotate on a vertical axis and equipped with gripping means 11, e.g. suction cups.

Moreover, the device 1 comprises sensor elements 12, 13, and 14 situated on a panel 15 carried by an arm 16 raising from the stationary frame 7.

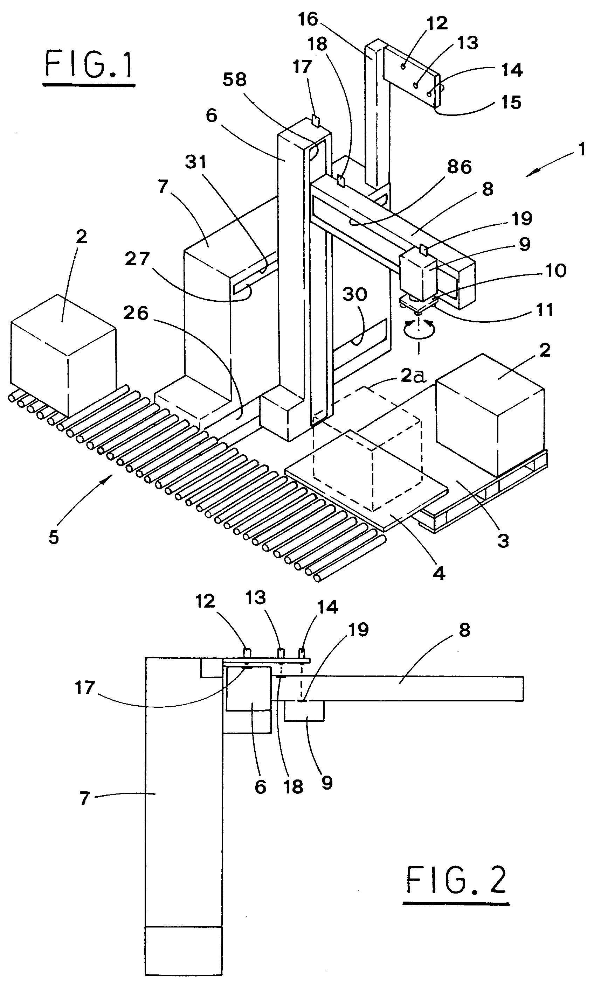

The sensor elements 12, 13, and 14 are designed to cooperate with respective sights 17, 18, and 19 to define the zero position of the column 6, the cross-piece 8 and the carriage 9 (see also Fig. 2).

A similar sensor element, not shown, is destined to define the zero position of the rotating head 10.

Inside the stationary frame 7 there are located moving means 20 for the column 6, the cross-piece 8, the carriage 9 and the rotating head 10.

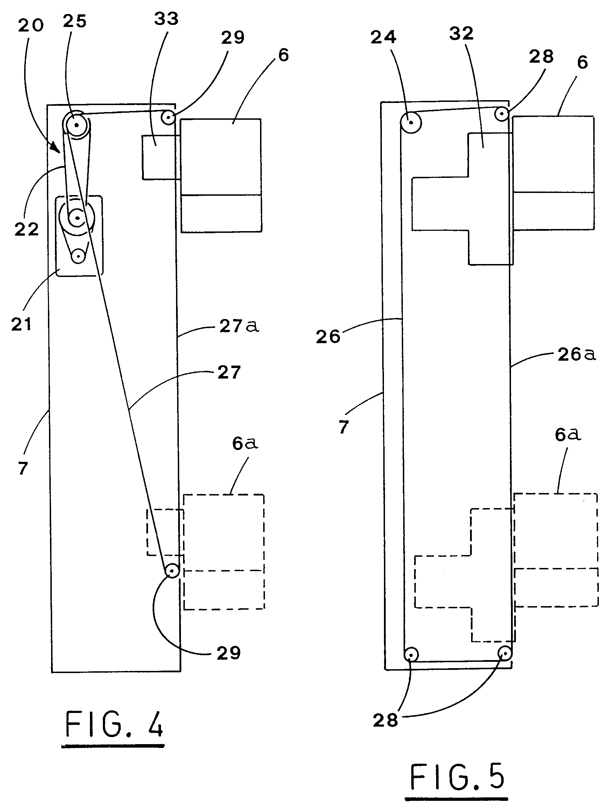

These moving means 20 feature a motor means 21 (Fig. 4), which rotates, via a transmission member 22, a shaft 23 that is rotatably supported in vertical condition.

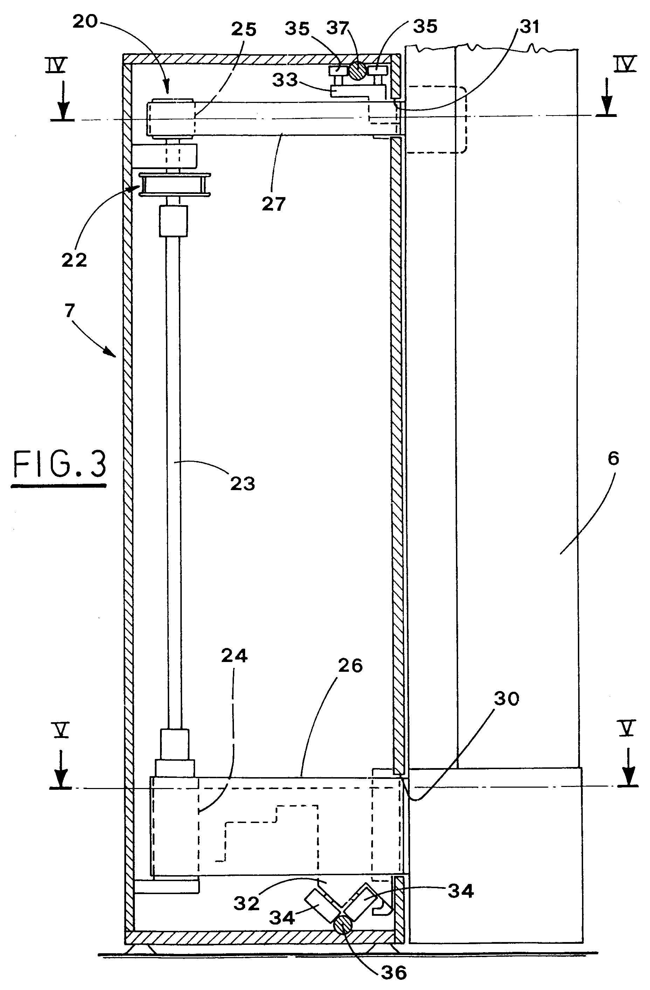

At its lower and upper extremities, the driving shaft 23 carries respective toothed pulleys 24, 25, which transmit movement to a lower toothed belt 26 and to an auxiliary upper toothed belt 27 (Fig. 3).

The toothed belts 26, 27 are trained around related transmission pulleys 28,29 which delimit longitudinal sections of the same toothed belts, for clarity indicated with 26a,27a in Figs. 4 and 5, facing relative openings 30,31 made in the side of the frame 7, along which the column 6 moves.

It is to be pointed out that the belts 26, 27 act also as covering elements for the openings 30, 31 of the frame 7.

The toothed belts 26, 27 are fastened, in the regions of the above mentioned openings 30,31, to a couple of carriages 32, 33, integral with the column 6; the carriages 32, 33 are slidably guided by rollers 34,35 on a couple of horizontal guides 36, 37, situated longitudinally inside the frame 7 (Fig. 3).

In practice, the motor 21, operated according to opposite directions, is capable of driving the straight movement of the column 6 between the above mentioned zero position and an advanced position, indicated with 6a in Figs. 4 and 5.

The moving means 20 comprise also, inside the frame 7, three other motor means 38, 39 and 40, which operate respectively, the cross-piece 8, the carriage 9 and the rotating head 10.

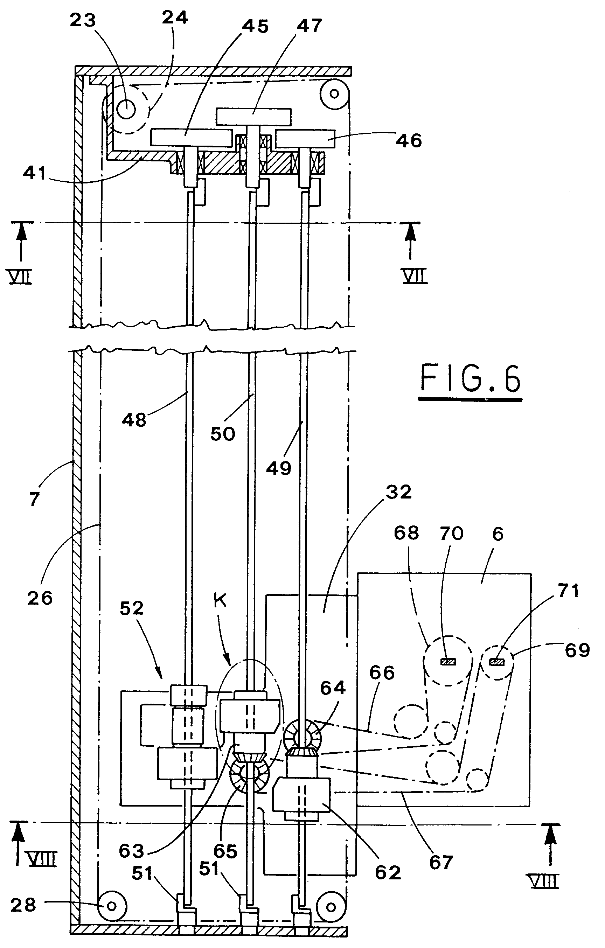

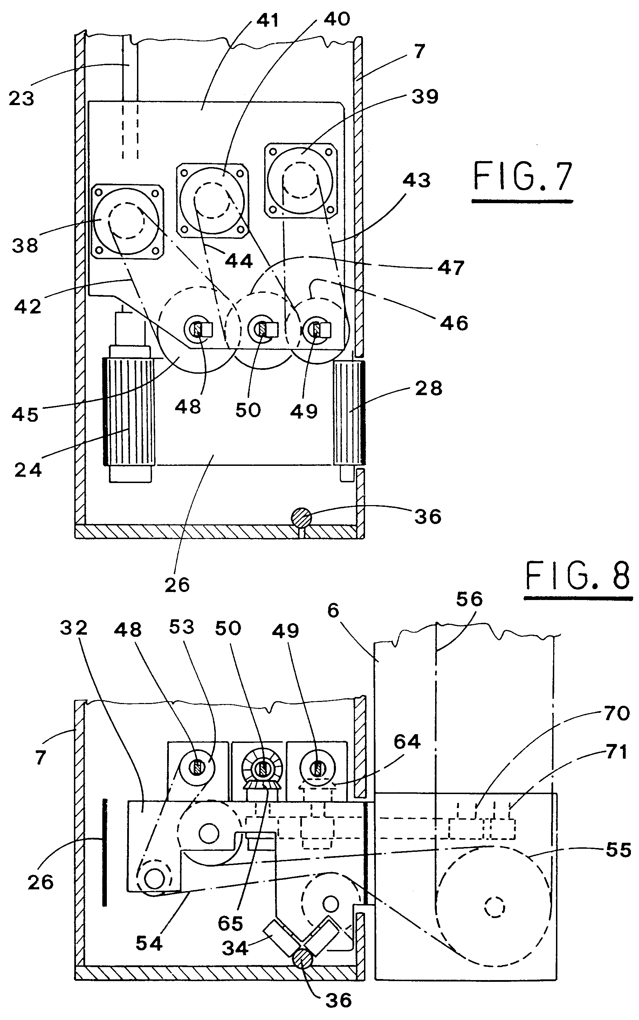

These motors 38, 39 and 40 are supported by a vertical plate 41, situated substantially in a lower part of the frame 7 (Figs 6 and 7). The motors 38, 39 and 40 drive respectively, through relative transmission means 42, 43 and 44, related pulleys 45, 46 and 47 to rotate.

The said pulleys 45, 46 and 47 are rotatingly supported by the plate 41 and fastened to one extremity of respective prismatic bars 48, 49 and 50, which, on the other extremity, are fastened to rotating supports 51 mounted on the frame 7.

The bars 48, 49 and 50 extend longitudinally with respect to the frame 7, on a horizontal plan situated slightly over the lower opening 30.

The bars 48, 49 and 50 engage a movement transmission group, indicated as a whole with 52, carried over the carriage 32.

This transmission group 52 is designed to transmit the rotatory movement generated by the motors 38, 39 and 40 for respectively, activation of the translation of cross-piece 8 and the carriage 9 and activation of the rotation of the rotating head 10.

In particular, a pulley 53, which is keyed onto the first bar 48, is aimed at driving, through a belt transmission element 54, a toothed drum 55 to rotate.

The toothed drum 55 is mounted on the base of the column 6 with possibility to rotate around a horizontal rotating axis (Fig. 8).

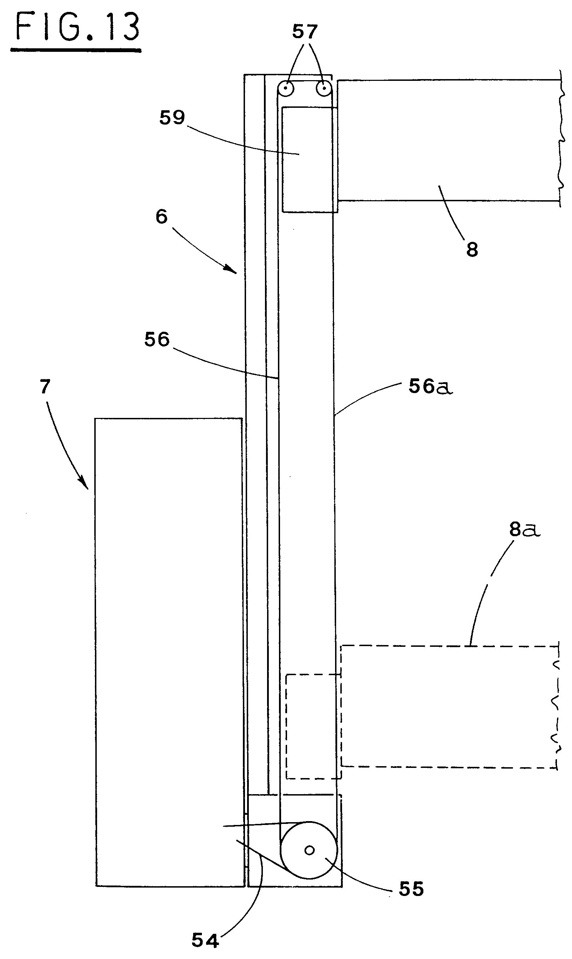

The toothed drum 55 is engaged by a toothed belt 56, which, at the top of the column 6, passes around a couple of pulleys 57 (Fig. 13).

The belt 56 features a vertical section, for bigger clearness indicated with 56a in Fig. 13, facing a correspondent opening 58 made in a side of the column 6; the belt 56 acts as a covering element for this opening 58.

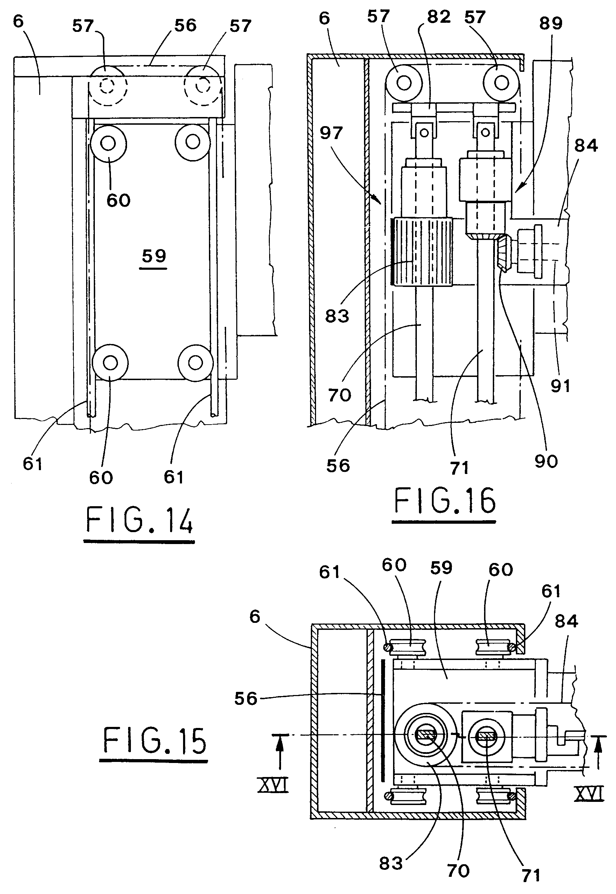

The toothed belt 56 is fastened, in correspondence to the opening 58, to a carriage 59, integral with the cross-piece 8; the carriage 59 is slidably guided by a couple of rollers 60 on vertical guides 61, situated at the corners of a quadrilateral inside the column 6 (Figs. 14 and 15).

In fact, the motor 38, operated according to opposite directions, is capable of driving the straight movement of the cross-piece 8 between the above mentioned zero raised position and a lowered position, indicated with 8a in Fig. 13.

The bars 49,50 engage respective transmission means 62,63 equipped with relative bevel gears 64, 65 (Figs. 6 and 8); these bevel gears 64,65 drive to move respective transmission belt means 66,67, aimed at rotating, through pulleys 68,69, another couple of bars 70,71.

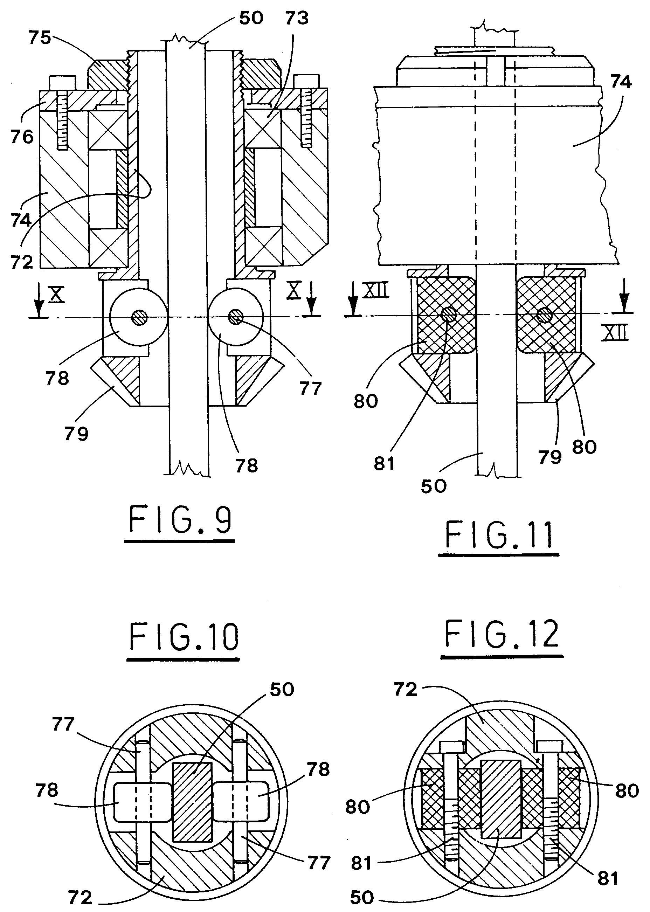

The bars 70,71 are supported inside the column 6 with possibility to rotate vertically. As seen in detail from the Figs. 9 and 10, the transmission means 62, 63 feature similarly a tubular body 72, which is rotatingly carried, through bearings 73 by a sleeve 74 integral with the carriage 32; the tubular body 72 is axially fastened to the sleeve 74 by a ring nut 75 that locks a plate 76 forming the front closing of the same sleeve 74.

The tubular body 72 supports pins 77 on which a couple of guiding rollers 78 rotate freely for pushing the bar 49,50 on opposite sides thereof.

Obviously, this connection allows the transmission means 62,63 to longitudinally slide along the bars 49,50, and at the same time fastens in rotatory direction the same bars 49,50 to the rotating body 72 of the same transmission means 62,63.

Moreover, at one extremity, the tubular body 72 has a bevel pinion 79 that forms the above mentioned gears 64,65.

According to another embodiment of the invention, shown in Figs 11 and 12, the bar 49,50 is fastened to the tubular body 72 by a couple of sliding blocks 80, made of suitable, sliding facilitating, material, fastened in diametrically opposite positions by screws 81.

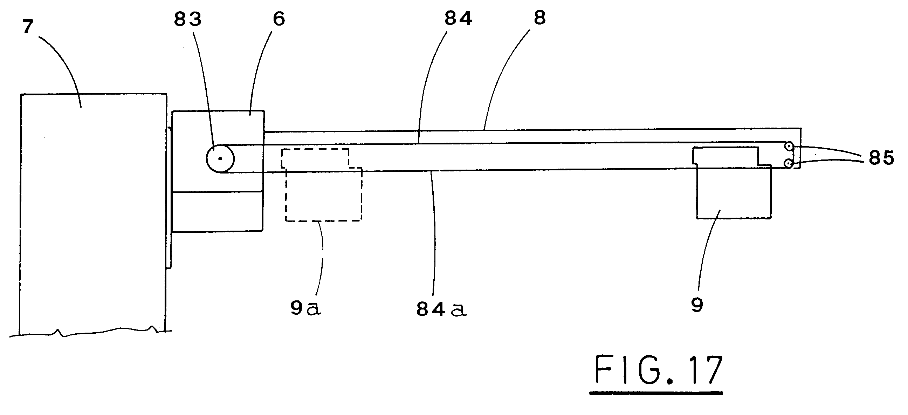

Other bars 70, 71 are fastened to rotating supports 82 mounted on the top of the column 6 (Fig. 16), respectively for the transmission of translation movement of the carriage 9 and the rotation of the rotating head 10.

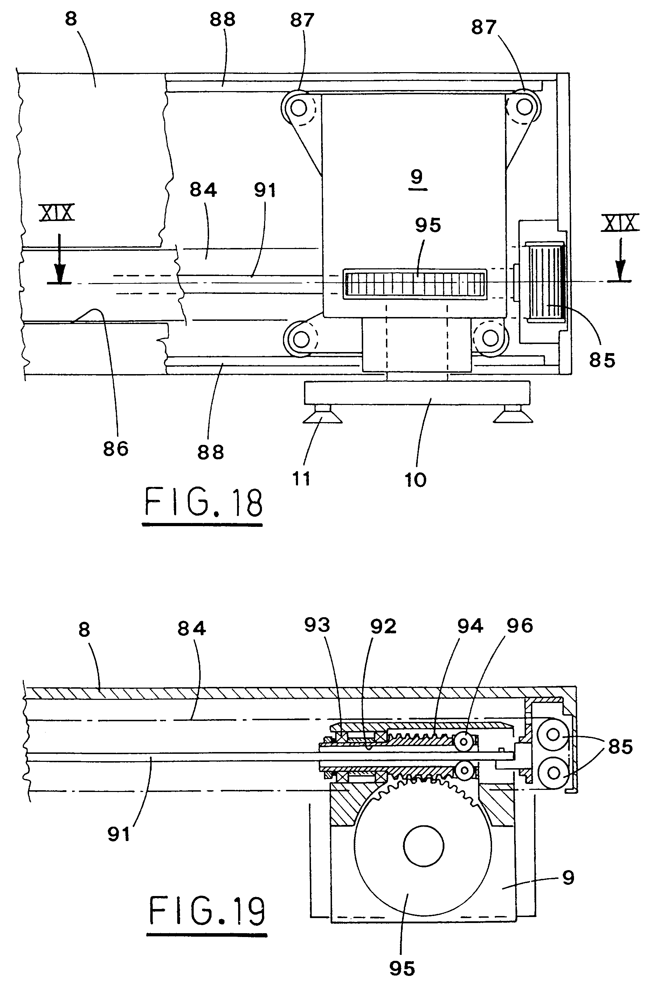

In particular, the bar 70 is connected with a pulley 83, rotatingly carried by the carriage 59 and engaged by a toothed belt 84 that extends longitudinally with respect to the cross-piece 8 and passes around a couple of toothed belts 85, at the extremity of the same cross-piece 8 (Figs. 18 and 19).

The pulley 83 is a part of a second transmission group indicated as a whole with 97.

The belt 84 features a horizontal section, for bigger clearness indicated with 84a in Fig. 17, facing a corresponding opening 86 made in a side of the cross-piece 8; the belt 84 acts as a covering element for the opening 86.

The toothed belt 84 is fastened to the carriage 9 in correspondence with the opening 86; this carriage 9 is slidably guided, by couples of rollers 87, on horizontal guides 88 extended longitudinally to the cross-piece 8 (Figs. 18 and 19).

In this way it is possible to control the straight movement of the carriage 9 between a full bump position, situated substantially at the free extremity of the cross-piece 8, and the above mentioned zero position, located near the column 6, indicated with 9a in Fig. 17.

Finally, the bar 71 engages another transmission means 89 fastened to the carriage 59, structurally similar to the means previously illustrated in Figs. 9 and 10 (Fig. 16).

This transmission means 89 operates a bevel gear 90 destined to drive to rotate another bar 91 extending longitudinally to the cross-piece 8.

The bar 91 passes through a sleeve 92, which is rotatingly supported, through rolling bearings 93, by the carriage 9.

The sleeve 92 forms axially a worm screw 94 which is in gear connection with a helical gear 95 fastened to the axis of the rotating head 10 (Figs. 18 and 19).

The sleeve 92 carries, freely rotating, a couple of gripping rollers 96, aimed at tightening the bar 91 from the opposite sides.

Obviously, this connection allows the carriage 9 to slide longitudinally along the bar 91, and at the same time fastens in rotatory direction the same bar 91 to the sleeve 92.

Consequently, by operating in a proper order the electric motors 21,38,39 and 40, it is possible to operate alternative movement respectively of the column 6, the cross-piece 8 and the carriage 9, as well as the angular rotation of the rotating head 10.

The said motors are driven by a control unit, of known type, aimed at controlling the transfer of articles 2 from the withdrawing platform 4 to the pallet 3.

In fact, the articles 2 are conveyed one by one to the withdrawing platform 4, in the position indicated with broken line 2a in Fig. 1, and then withdrawn by gripping means 11 of the rotating head 10 and transferred in a regular way to the pallet 3.

It is to be particularly pointed out that the described device does not have the external activating means or relative connecting means.

In fact, the group 20 for moving the column 6, the cross-piece 8, the carriage 9 and the rotating head 10, is situated inside the stationary frame 7, while the movement is transmitted through means that are completely housed inside the above mentioned column 6 and the cross-piece 8.

Therefore, the device structure is functional and compact, that facilitates the best operating of the moving means and possible maintenance operations.

This result is obtained also by the fact that the sensor elements 12, 13, 14 aimed at defining the zero position of the said moving means, are situated on the only panel 15 supported outside the stationary frame 7.

An important feature of the subject device is that the column 6, the cross-piece 8 and the carriage 9 are operated by the toothed belts 26, 27, 56, 84 aimed at acting as covering elements of the openings 30, 31, 58, 86.

This feature not only contributes to the device compactness, but also constitutes an element of bigger safety and cleanness of the above mentioned moving means.

## Claims

1. Device for gathering articles onto pallets and the like, this device comprising:
a column (6) that moves horizontally along a side of a stationary frame (7);
a horizontal cross-piece (8) that moves vertically along the column (6);
a carriage (9) that moves horizontally along the cross-piece (8);
a rotating head (10) supported by the carriage (9) with the possibility to rotate on a vertical axis and equipped with gripping means (11);
moving means (20) for said column (6), said cross-piece (8), said carriage (9) and said rotating head (10);
this device being characterised in that:
said moving means (20) are located inside said frame (7);
flexible transmission means (26, 56, 84) are carried respectively inside the frame (7), the column (6) and the cross-piece (8);
said moving means (20) operate, via transmission groups (52, 97), said flexible transmission means (26, 56, 84); said flexible transmission means (26, 56, 84) have respective sections facing related openings (30, 58, 86) made in said frame (7), said column (6) and said cross-piece (8);
said flexible transmission means (26, 56, 84) are made integral with said column (6), said cross-piece (8), and said carriage (9) respectively in the region of said related openings (30, 58, 86).

2. Device, according to claim 1, characterised in that it includes sensor elements (12, 13, 14) situated on a panel (15) supported outside said stationary frame (7) and cooperating with respective sights (17, 18, 19) for defining the zero position of said column (6), said cross-piece (8) and said carriage (9).

3. Device, according to claim 1, characterised in that it includes a transmission group (52) carried inside said frame (7), integrally with said column (6), for transmission of rotatory movement generated by motors (38,39,40) of said moving means (20) for respectively, activation of the translation of said cross-piece (8) and said carriage (9) and activation of the rotation of said rotating head (10).

4. Device, according to claim 3, characterised in that said transmission group (52) features transmission means (62,63) equipped with relative bevel gears (64,65), which are fastened to respective bars (49,50), supported with possibility to rotate horizontally inside said frame (7) and that are operated by said motors (39,40) for driving, via transmission means (66,67) other bars (70, 71) supported with possibility to rotate vertically inside said column (6), for translation of said carriage (9) and the rotation of said rotating head (10).

5. Device, according to claim 4, characterised in that said transmission means (62,63) feature a tubular body (72) rotatingly carried by a carriage (32), that moves horizontally along said frame (7), and supports guiding means (78,80) that push said bar (49,50) at opposite sides, allowing the same transmission means (62,63) to slide longitudinally along said bars (49,50).

6. Device, according to claim 4, characterised in that said other bars (70,71) engage another transmission group (97) carried by a carriage (59), that is vertically movable along said column (6) and integral with said cross-piece (8), for the transmission of the translation movement of said carriage (9) and the rotation of said rotating head (10).

7. Device, according to claim 1, characterised in that said flexible transmission means (26,56,84) include toothed belts which act as covering elements for said openings (30,58,86) of said frame (7), column (6) and cross-piece (8).

8. Device, according to claim 1, characterised in that said moving means feature a first motor (21) for rotation of a shaft (23) supported with possibility to rotate vertically inside said frame (7) and aimed at transmitting the movement to a toothed belt (26), fastened to a carriage (32), integral with said column (6) and slidably guided on horizontal guide means (36), situated longitudinally inside said frame (7); and other motors (38,39,40) which rotate respective prismatic bars (48,49,50) rotatingly supported longitudinally to said frame (7) and engaging a movement transmission group (52), carried by said carriage (32), respectively for the activation of the translation of said cross-piece (8) and said carriage (9) and the rotation of said rotating head (10).

9. Device, according to claim 1, characterised in that said rotating head (10) is rotated by a worm screw (94), carried by said carriage (9) and rotated by a bar (91), supported with possibility to rotate horizontally along said cross-piece (8) and in sliding engagement with the same worm screw (94).

## Patentansprüche

1. Vorrichtung zur Zusammenstellung von Artikeln auf Paletten oder ähnlichen Einrichtungen, wobei die Vorrichtung umfaßt:
einen Schacht (6), der in horizontaler Richtung entlang einer Seite eines staionären Rahmens (7) beweglich angeordnet ist;
ein sich horizontal erstreckendes Querelement (8), das in vertikaler Richtung entlang des Schachtes (6) beweglich angeordnet ist;
einen Träger (9), der in horizontaler Richtung entlang des Querelementes (8) beweglich angeordnet ist;
einen Rotationskopf (10), der vom Träger (9) gehaltert wird und die Möglichkeit aufweist, entlang einer vertikalen Achse zu rotieren und der mit Greifmitteln (11) ausgestattet ist;
Bewegungsmittel (20) für den Schacht (6), das Querelement (8), den Träger (9) sowie den Rotationskopf (10);
die Vorrichtung ist dadurch gekennzeichnet, daß
die Mittel (20) zur Bewegung innerhalb des Rahmens (7) angeordnet sind;
flexible Übertragungsmittel (26, 56, 84) jeweilig innerhalb des Rahmens (7), des Schachtes (6) und des Querelementes (8) gehaltert sind;
die Mittel (20) zur Bewegung betätigen mittels von Übertragungselementen (52, 97) die flexiblen Übertragungsmittel (26, 56, 84);
die flexiblen Übertragungsmittel (26, 56, 84) sind jeweilig mit Bereichen ausgestattet, die zugehörigen Öffnungen (30, 58, 86) innerhalb des Rahmens (7), des Schachtes (6) und des Querelementes (8) gegenüberliegen;
die flexiblen Übertragungsmittel (26, 56,84) sind integral mit dem Schacht (6), dem Querelement (8) und dem Träger (9) jeweils im Bereich der zugehörigen Öffnungen (30, 58, 86) ausgebildet.

2. Vorrichtung nach Anspruch 1, dadurch gekennzeichnet, daß diese Sensorelemente (12, 13, 14) aufweist, die auf einer Konsole (15) angeordnet sind, die außerhalb des Rahmens (7) angeordnet ist und die mit zugehörigen Sichtelementen (17, 18, 19) zuSammenwirken, um eine Nullpositionierung des Schachtes (6), des Querelementes (8) und des Trägers (9) zu definieren.

3. Vorrichtung nach Anspruch 1, dadurch gekennzeichnet, daß diese eine Übertragungsgruppe (52) beinhaltet, die innerhalb des Rahmens (7) angeordnet und integral mit dem Schacht (6) ausgebildet ist, um eine Rotationsbewegung zu übertragen, die von Motoren (38, 39, 40) der Mittel (20) zur Bewegung erlangt wird und hierdurch jeweilig eine Aktivierung der Translationsbewegung des Querelementes (8) und des Trägers (9) und eine Aktivierung der Rotation des Rotationskopfes (10) hervorzurufen.

4. Vorrichtung nach Anspruch 3, dadurch gekennzeichnet, daß die Übertragungsgruppe (52) Übertragungsmittel (62, 63) aufweist, die mit entsprechend abgeschrägten Zahnrädern (64, 65) ausgestattet sind, die auf zugehörigen Streben (49, 50) befestigt sind und die eine Halterung derart aufweisen, daß eine horizontale Rotation innerhalb des Rahmens (17) ermöglicht wird und die von den Motoren (39, 40) angetrieben werden, um mittels der Mittel zur Übertragung (66, 67) andere Streben (70, 71) anzutreiben, die derart innerhalb des Schachtes (6) angeordnet sind, daß eine vertikale Rotation ermöglicht ist, um eine Translationsbewegung des Trägers (9) und eine Rotation der Rotationsköpfe (10) durchzuführen.

5. Vorrichtung nach Anspruch 4, dadurch gekennzeichnet, daß die Mittel (62, 63) zur Übertragung einen tubusförmigen Körper (72) aufweisen, der rotaionsfähig von einem Träger (32) gehaltert ist, der in horizontaler Richtung beweglich entlang des Rahmens (7) geführt ist und der Führungsmittel (78, 80) trägt, die die Strebe (49, 50) auf gegenüberliegenden Seiten mit Schub beaufschlagen, um eine Gleitbewegung in Längsrichtung der Mittel zur Übertragung (62, 63) entlang der Streben (49, 50) durchzuführen.

6. Vorrichtung nach Anspruch 4, dadurch gekennzeichnet, daß weitere Streben (70, 71) in eine weitere Übertragungsgruppe (97) eingreifen, die von einem Träger (59) gehaltert ist, der in vertikaler Richtung entlang des Schachtes (6) beweglich geführt ist und integral mit dem Querelement (8) ausgebildet ist, um eine Übertragung der Translationsbewegung (9) und eine Rotation des Rotationskopfes (10) zu verursachen.

7. Vorrichtung nach Anspruch 1, dadurch gekennzeichnet, daß die flexiblen Mittel (26, 56, 84) zur Übertragung Zahnriemen umfassen, die als Abdeckelemente für die Öffnungen (30, 58, 86) des Rahmens (7), des Schachtes (6) und des Querelementes (8) dienen.

8. Vorrichtung nach Anspruch 1, dadurch gekennzeichnet, daß die Mittel zur Bewegung einen ersten Motor (21) aufweisen, um eine Rotation eines Schaftes (23) durchzuführen, der derart innerhalb des Rahmens (7) gehaltert wird, daß eine vertikale Rotation ermöglicht ist und der dafür vorgesehen ist, die Bewegung zu einem Zahnriemen (26) zu übertragen, der auf einem Träger (32) integral mit dem Schacht (6) befestigt ist und der gleitfähig auf horizontalen Führungsmitteln (36) angeordnet ist, die in Längsrichtung innerhalb des Rahmens (7) angeordnet sind; darüber hinaus sind weitere Motoren (38, 39, 40) vorgesehen, die jeweils Drehbewegungen von prismatischen Streben (48, 49, 50) hervorrufen, die in Längsrichtung rotationsfähig vom Rahmen (7) getragen sind und in eine zur Übertragung von Bewegungen vorgesehenen Gruppe (52) eingreifen, die vom Träger (32) gehaltert ist und jeweilig eine Aktivierung der Translationsbewegung des Querelementes (8) und des Trägers (9) und eine Rotation der Rotationsköpfe (10) durchführen.

9. Vorrichtung nach Anspruch 1, dadurch gekennzeichnet, daß der Rotationskopf (10) von einer Schnekkenschraube (94) in Drehbewegung versetzt wird, die vom Träger (9) geführt ist und die durch eine Strebe (91) verdrehbar ist sowie die derart gehaltert ist, daß eine horizontale Rotationsbewegung entlang des Querelementes (8) möglich ist und die in gleitfähiger Anordnung mit der Schneckenschraube (94) zusammenwirkt.

## Revendications

1. Appareil destiné à regrouper des articles sur des palettes et analogues, l'appareil comprenant :
une colonne (6) qui se déplace horizontalement le long d'un côté d'un châssis fixe (7),
une traverse horizontale (8) qui se déplace verticalement le long de la colonne (6),
un chariot (9) qui se déplace horizontalement le long de la traverse (8),
une tête rotative (10) supportée par le chariot (9) avec une possibilité de rotation autour d'un axe vertical et comprenant un dispositif de saisie (11), et
un dispositif (20) de déplacement de la colonne (6), de la traverse (8), du chariot (9) et de la tête rotative (10),
l'appareil étant caractérisé en ce que :
le dispositif de déplacement (20) est disposé à l'intérieur du châssis (7),
une transmission souple (26, 56, 84) est supportée respectivement à l'intérieur du châssis (7), de la colonne (6) et de la traverse (8),
le dispositif de déplacement (20) provoque le fonctionnement de la transmission souple (26, 56, 84) par l'intermédiaire de groupes de transmissions (52, 97),
la transmission souple (26, 56, 84) a des tronçons respectifs tournés vers des ouvertures associées (30, 58, 86) formées dans le châssis (7), la colonne (6) et la traverse (8), et
la transmission souple (26, 56, 84) est réalisée afin qu'elle soit solidaire de la colonne (6), de la traverse (8) et du chariot (9) respectivement dans la région des ouvertures associées (30, 58, 86).

2. Appareil selon la revendication 1, caractérisé en ce qu'il comporte des éléments capteurs (12, 13, 14) situés sur un panneau (15) supporté à l'extérieur du châssis fixe (7) et coopérant avec des organes respectifs de visée (17, 18, 19) pour la délimitation de la position zéro de la colonne (6), de la traverse (8) et de du chariot (9).

3. Appareil selon la revendication 1, caractérisé en ce qu'il comporte un groupe de transmission (52) supporté à l'intérieur du châssis (7), solidaire de la colonne (6) et destiné à transmettre un mouvement de rotation créé par des moteurs (38, 39, 40) du dispositif de déplacement (20) pour l'activation respective du déplacement en translation de la traverse (8) et du chariot (9) et pour l'activation en rotation de la tête rotative (10).

4. Appareil selon la revendication 3, caractérisé en ce que le groupe de transmission (52) comporte des moyens transmission (62, 63) équipée de pignons coniques associés (64, 65) qui sont fixés à des barres respectives (49, 50) supportées avec une possibilité de rotation horizontale dans le châssis (7) et qui sont commandés par lesdits moteurs (39, 40) pour l'entraînement, par l'intermédiaire de transmissions (66, 67), d'autres barres (70, 71) supportées avec une possibilité de rotation verticale dans la colonne (6) pour le déplacement en translation du chariot (9) et en rotation de la tête rotative (10).

5. Appareil selon la revendication 4, caractérisé en ce que les moyens de transmission (62, 63) comportent un corps tubulaire (72) supporté par le chariot (32) afin qu'il puisse tourner, qui se déplace horizontalement le long du châssis (7) et qui supporte un dispositif de guidage (78, 80) qui pousse la barre (49, 50) sur des côtés opposés, en permettant aux mêmes moyens de transmission (62, 63) de coulisser longitudinalement le long desdites barres (49, 50).

6. Appareil selon la revendication 4, caractérisé en ce que les autres barres (70, 71) coopèrent avec un autre groupe de transmission (97) supporté par un chariot (59) qui est mobile verticalement le long de la colonne (6) et qui est solidaire de la traverse (8) pour la transmission du mouvement de translation du chariot (9) et de rotation de la tête rotative (10).

7. Appareil selon la revendication 1, caractérisé en ce que la transmission souple (26, 56, 84) comprend des courroies crantées qui jouent le rôle d'éléments de recouvrement des ouvertures (30, 58, 86) du châssis (7), de la colonne (6) et de la traverse (8).

8. Appareil selon la revendication 1, caractérisé en ce que le dispositif de déplacement comporte un premier moteur (21) destiné à faire tourner un arbre (23) supporté avec une possibilité de rotation verticale à l'intérieur du châssis (7) et destiné à transmettre le mouvement à une courroie crantée (26) fixée à un chariot (32) solidaire de la colonne (6) et guidé par coulissement sur un dispositif horizontal de guidage (36) situé longitudinalement à l'intérieur du châssis (7), et d'autres moteurs (38, 39, 40) qui font tourner des barres prismatiques respectives (48, 49, 50) supportées en rotation longitudinalement par rapport au châssis (7) et coopérant avec un groupe de transmissions de déplacement (52) porté par le chariot (32) et destinées à assurer respectivement l'activation du déplacement en translation de la traverse (8) et du chariot (9) et la rotation de la tête rotative (10).

9. Appareil selon la revendication 1, caractérisé en ce que la tête rotative (10) est entraînée en rotation par une vis sans fin (94) portée par le chariot (9) et entraînée en rotation par une barre (91) supportée avec une possibilité de rotation horizontale le long de la traverse (8) et en contact coulissant avec la même vis d'engrenage (94).
